Europäisches Patentamt

European Patent Office

Office européen des brevets

(19)

(11) Publication number: **0 060 058**
**B1**

# (12) EUROPEAN PATENT SPECIFICATION

(45) Date of publication of patent specification: **21.08.85**

(21) Application number: **82300957.6**

(22) Date of filing: **25.02.82**

(51) Int. Cl.⁴: **H 02 B 11/04**

(54) **Switch gear with stab-positioning system.**

(30) Priority: **09.03.81 US 241920**

(43) Date of publication of application:
**15.09.82 Bulletin 82/37**

(45) Publication of the grant of the patent:
**21.08.85 Bulletin 85/34**

(84) Designated Contracting States:
**BE DE FR GB IT**

(56) References cited:
**DE-B-1 028 655**
**DE-C- 580 998**
**US-A-4 002 865**

(73) Proprietor: **WESTINGHOUSE ELECTRIC CORPORATION**
**Westinghouse Building Gateway Center**
**Pittsburgh Pennsylvania 15222 (US)**

(72) Inventor: **Zwillich, Alexander**
**6441 Nicholson Street**
**Pittsburgh Pennsylvania (US)**
Inventor: **Merola, Carl Robert**
**1147 Clemson Drive**
**Monroeville Pennsylvania (US)**
Inventor: **Ciccotelli, Stephen Samuel**
**745 10th Street**
**Pitcairn Pennsylvania (US)**

(74) Representative: **van Berlyn, Ronald Gilbert**
**23, Centre Heights**
**London, NW3 6JG (GB)**

Courier Press, Leamington Spa, England.

# Description

This invention relates to metal-enclosed switchgear comprising a stab-positioning system for a primary disconnect contact system and current conductors of metal-enclosed switchgear having removable draw-out circuit breaker units.

Whenever a draw-out circuit breaker device is utilized, the maintenance, testing and installation require that the circuit breaker be pulled out from or put back into a metal-enclosed switchgear housing. This requires the making and breaking of contact between the circuit breaker mechanism itself and current carrying conductors in the switchgear metal-enclosed housing. Generally, the circuit breaker apparatus will have a cluster arrangement having resilient fingers which move in conjunction with the circuit breaker itself making and breaking contact with fixed conductors, which are generally referred to as stabs and are insulated from and rigidly attached to the switchgear metal-enclosed housing, as disclosed in the specification of U.S. Patent Nos. 4,002,865, 4,002,864 and 3,562,593. These, as well as other types of draw-out switchgear, require precise positioning of the stab unit so that no voltage drop or excess heat is produced at the point of electrical contact between the cluster and stab connection. This requires alignment of the stabs during the construction, maintenance and testing aspects of the circuit breaker. Therefore, some stab alignment schemes utilize extensive and complicated arrangements to ensure proper stab alignment.

It is desirable to have a stab which is easier to position in the switchgear enclosure, provides precise alignment and requires less attention at the time of manufacture, test, maintenance and replacement. It is also desirable to have a stab arrangement which is less complex and requires fewer parts.

According to the present invention, a switchgear comprises a support disposed within an insulating housing for supporting at least a conductor for connection with an external electrical circuit, a first lock retaining member abutting said support having a vertical aperture therein supporting in a vertical position an electrical stab for electrical connection with a corresponding conductor, a horizontal opening formed by ledges in the first lock retaining member which is connected to said vertical aperture whereby the electrical stab is rotated from the vertical aperture position to the horizontal opening position, a second lock retaining member abutting the support, axially spaced from the first lock retaining member having a horizontal aperture therein supporting and locking the electrical stab in a horizontal position after rotation thereof to the horizontal opening position, and a circuit breaker connected to the electrical stab for distribution of power in the switchgear.

Conveniently, the stab positioning system is arranged so as to provide precise alignment between the stab which is contained in the switchgear housing and the cluster which is mounted on a circuit breaker. The stab is a bar having notches on opposing sides. A retainer or positioning washer having a bayonet-lock type opening is utilized for permitting the insertion and rotation of the stab thereby positioning the stab so as to prohibit the axial displacement of the stab with respect to the first positioning washer. A retainer or positioning washer having an opening slightly larger than that of the stab is utilized so that upon the insertion of the stab, the stab is prohibited from rotating with respect to the opening in the positioning washer. A partition, which is rigidly attached to the switchgear housing, is used to contain the positioning washers which are holding the stab. The partition may be cylindrical having a ledge on the inner wall which separates the positioning washers as well as provides a method whereby a fastening device may rigidly attach the two washers together, thereby securely and precisely locating the stab in the insulating partition and therefore the switchgear housing.

The invention will now be described, by way of example, with reference to the accompanying drawings, in which:

Figure 1 is an exploded of the stab positioning system;

Figure 2 is an illustration of the circuit breaker switchgear and housing which utilize the stab positioning system;

Figure 3 is a differing view of that shown in Figure 2 illustrating the circuit breaker mechanism specifically;

Figure 4 is a diagrammatic top view illustrating the stab positioning system;

Figure 5 is a sectional view taken through Figure 4 illustrating the stab position system; and

Figure 6 is a side-sectional view taken through Figure 4.

Throughout this description, like components will be identified by like numerals. Modified components similar in structure to previously described components, but differing in the view shown, will be identified by the previously assigned numeral with the addition of a prime (').

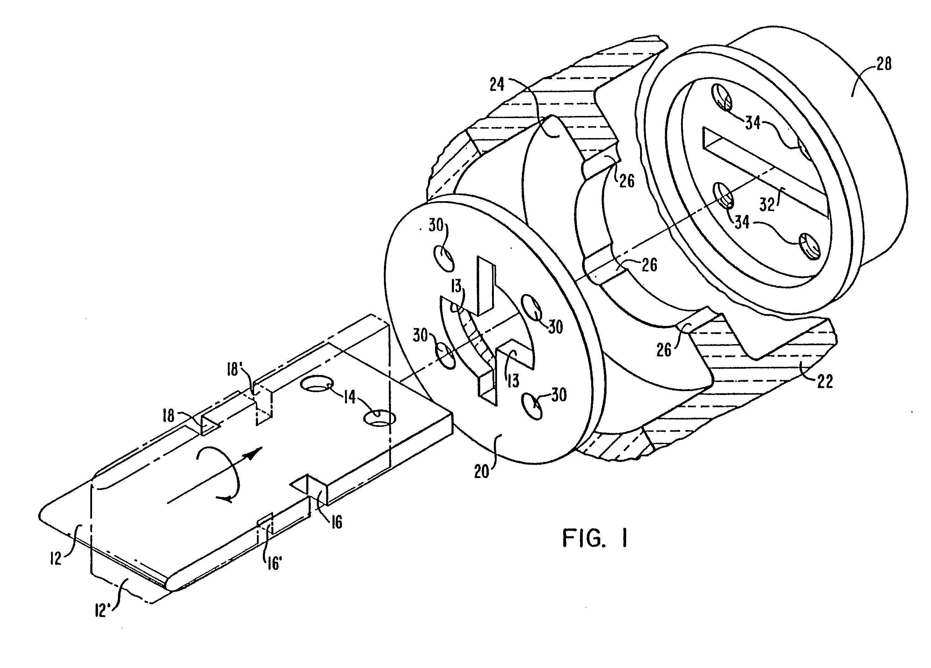

Figure 1 shows an exploded view of the stab positioning system. While only one stab is shown, it is to be understood that the stab system may be used for direct current or single-phase systems and is typically utilized in multi-phase alternating current systems requiring a number of stabs. The stab 12, 12' is made of electrically conducting material, such as copper and is shown in two positions. The construction of a stab positioning system requires that the stab be in a vertical position 12', shown in dotted lines and being then inserted into a retainer or stab positioning washer 20. The stab positioning washer 20 may be made of conducting or non-conducting material such as copper or glass polyester, respectively. Upon the insertion of the stab 12', the notches 16' and 18' are made to align with the bayonet-type opening of the stab positioning washer 20 and slightly wider than the cross-sectional area of the stab positioning washer 20. The stab 12' is then rotated in a clockwise fashion until the stab 12' makes contact with the ledges 13 of the bayonet opening of the stab positioning washer 20, thereby interlocking the stab positioning washer 20 with the stab 12. This therefore prohibits axial movement of the stab 12 with respect to the positioning washer 20. The stab positioning washer 20 and the stab 12 are then inserted into a support member or insulating partition 22 until the first stab positioning washer 20 contacts the insulating partition ledge 24, and the holes 30 through the stab positioning washer 20 line up with the key recesses 26 contained in the insulating partition ledge 24 of the insulating partition 22. A retainer or stab positioning washer 28 is then installed from the opposite side of the insulating partition ledge 24 so that it contacts the insulating partition ledge 24, thereby prohibiting the stab 12 from rotational movement with respect to the opening in the stab positioning washer 28. The stab slot 32 lines up with and engages the stab 12, and the holes 34 through the stab positioning washer 28 line up with the key recesses 26 contained in the insulating partitioning ledge 24 of the insulating partition 22.

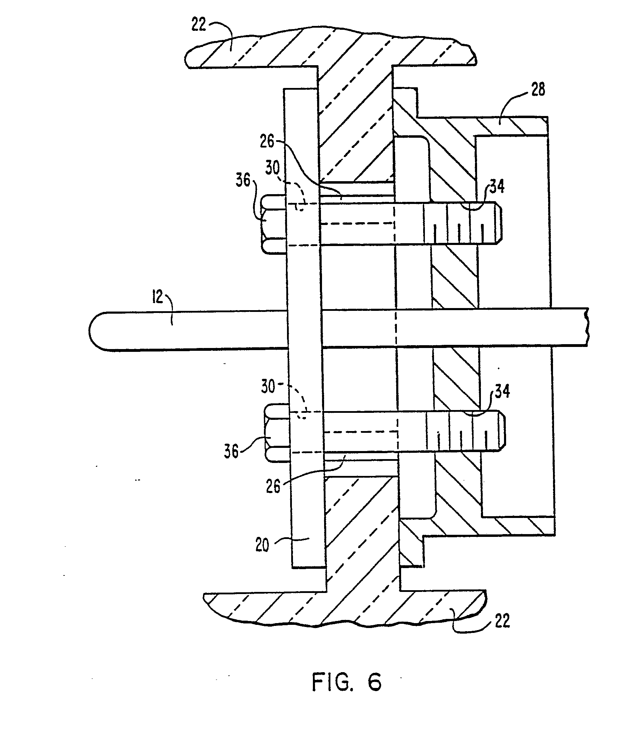

Referring now to Figure 6, there is shown a cross-sectional view of the assembled stab positioning system. Rigidly fastening the system are bolts 36 which are placed through the holes 30 contained in the stab positioning washer 20, through the key recesses 26 and into the holes 34 contained in the stab positioning washer 28. This rigidly fixes the stab in the insulating partition 22 and in all three spatial directions.

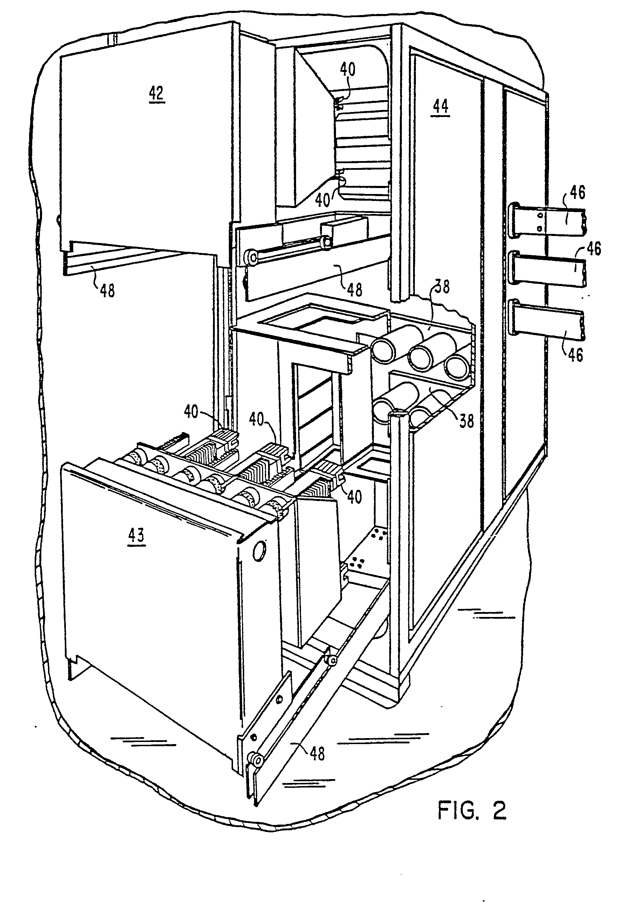

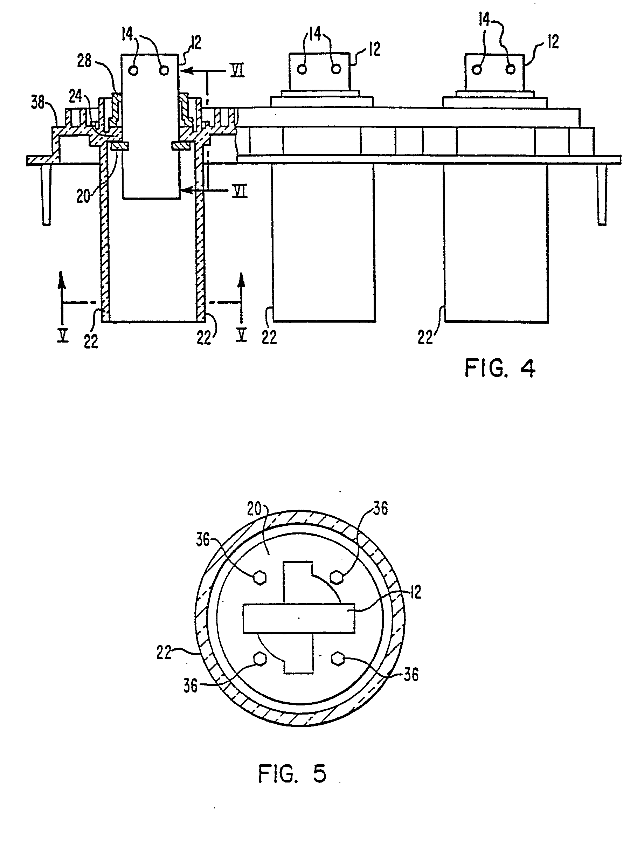

Referring now to Figure 4, there is shown a diagrammatic view illustrating the three stab positioning devices for a three-phase alternating current system. The support member or insulating partitions 22 are placed so as to provide adequate inter-phase electrical isolation as well as space for electrical and mechanical interconnection with the circuit breaker apparatus. The insulating partitions 22 which may be and suitable insulating material such as, for example, glass polyester, may be constructed so as to be an integral assemblage forming part of a stab positioning mounting frame 38. The stab positioning mounting frame 38 is then assembled in the switchgear housing as shown in Figure 2. The stabs 12 may be electrically connected to the line or load side of a power distribution system utilizing the bus-bar mounting holes 14.

Referring now to Figure 5, there is shown a cross-sectional view V—V taken through the assemblage shown in Figure 4. Shown is the insulating partition 22 encircling and holding the stab positioning system. The bolts 36 pass through the stab positioning washer 20, spatially positioning the stab.

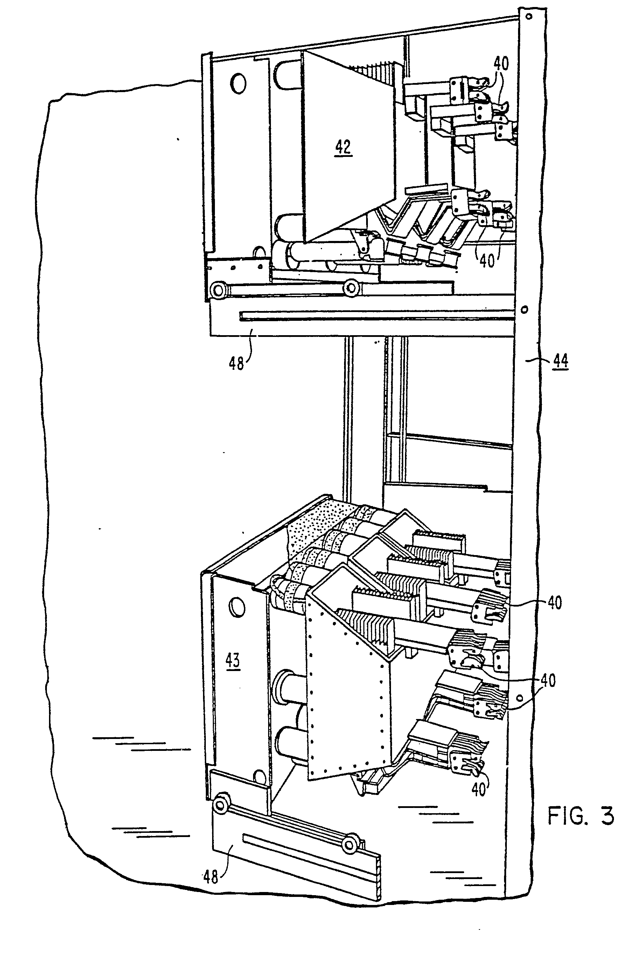

Referring now to Figure 2, there is shown a switchgear housing 44 which contains draw-out circuit breakers 42 and 43. The electrical interconnection of the draw-out circuit breakers 42 and 43 are through contact clusters 40, also shown in Figure 3, which have resilient fingers so as to make and break electrical contact with the associated stabs. The stab positioning system mounting frame 38 is mounted behind each draw-out circuit breaker 42, 43 (shown for illustration purposes behind draw-out circuit breaker 43 only). The draw-out circuit breakers 42 and 43 move in and out of the switchgear housing 44 on a sliding track 48. Upon the insertion of the draw-out circuit breakers 42 and 43, the contact clusters make electrical contact with the stab which is recessed in the corresponding insulating partition 22. The insulating partition 22 provides a number of advantages including, electrical isolation, elimination of inter-phase shorts and flashovers. In a typical three-phase alternating current system, six stab positioning systems are utilized, three for the line side of the draw-out circuit breaker and three for the load side of the draw-out circuit breaker.

It is to be understood that the present invention may utilize circuit control apparatus other than draw-out circuit breakers such as molded case circuit breakers or switches as well as other non-draw-out circuit control devices without departing from the spirit and scope of the present invention. Additionally, it is to be understood that the present invention is readily adaptable for use in non-switchgear housing environments. Further, it is to be understood that the insulating partition may be of a different type, for example, one which does not completely enclose the stab. Also, the bus-bar mounting holes contained in the stab may be located in the end of the stab or the shape of the stab need not be rectangular.

Therefore, the disclosed invention produces a stab positioning system which is uncomplicated, using few parts, achieving a high degree of precision location and orientation, eliminating design complexity and tedious assembly proeedures.

**Claims**

1. A switchgear comprising an insulating support (22) disposed within a housing (44) for supporting at least a conductor for connection with an external electrical circuit, a first lock retaining member (20) abutting said support having a vertical aperture therein supporting in a vertical position an electrical stab (12) for electrical connection with a corresponding conductor, a horizontal opening formed by ledges (13) in the first lock retaining member which is connected to said vertical aperture whereby the electrical stab is rotated from the vertical aperture position to the horizontal opening position, a second lock retaining member (28) abutting the support, axially spaced from the first lock retaining member having a horizontal aperture therein supporting and locking the electrical stab in a horizontal position after rotation thereof to the horizontal opening position, and a circuit breaker (42, 43) connected to the electrical stab for distribution of power in the switchgear.

2. Switchgear as claimed in claim 1 characterized in that the circuit breaker is a draw-out type circuit breaker having resilient fingers (40) to make and break electrical contact with the electrical stab (12).

**Patentansprüche**

1. Schaltvorrichtung, bestehend aus einem in einem Gehäuse (44) eingesetzten isolierenden Träger (22) für mindestens einen Leiter zum Anschluss an einen äusseren elektrischen Stromkreis, einem ersten Abdeckstück (20), der am Träger anliegt und eine vertikale Ausnehmung aufweist, in der ein elektrischer Stab (12) in vertikaler Stellung gehalten ist, der zum elektrischen Anschluss an einen entsprechenden Leiter dient, im ersten Abdeckstück eine durch Leisten (13) gebildete in die vertikale Ausnehmung mündende horizontale Ausnehmung vorgesehen ist, wodurch der elektrische Stab aus der vertikalen Stellung in die horizontale Stellung drehbar ist, ein zweites Abdeckstück (28) am Träger anliegt und axial im Abstand vom ersten Abdeckstück angeordnet ist und eine horizontale Ausnehmung aufweist, in der der elektrische Stab nach seiner Drehung in einer horizontalen Stellung gestützt und gehalten ist, und zur Energieverteilung in der Schaltvorrichtung ein Stromkreisunterbrecher (42, 43) am elektrischen Stab angeschlossen ist.

2. Schaltvorrichtung nach Anspruch 1, dadurch gekennzeichnet, dass der Stromkreisunterbrecher ein Ausziehausschalter mit federnden Fingern (40) ist, um den Kontakt mit dem elektrischen Stab (12) zu schliessen und zu unterbrechen.

**Revendications**

1. Installation de commutation comprenant un support isolant (22) disposé à l'intérieur d'une enceinte (44) pour supporter au moins un conducteur permettant la connexion avec un circuit électrique externe, un premier élément (20) de retenue de verrouillage venant s'appliquer contre ledit support et présentant une ouverture verticale pour supporter dans une position verticale une broche électrique (12) permettant la connexion électrique avec un conducteur correspondant, une ouverture horizontale formée par des épaulements (13) dans le premier élément de retenue de verrouillage, qui est reliée à ladite ouverture verticale, de telle sorte que la broche électrique peut tourner de la position de l'ouverture verticale à la position de l'ouverture horizontale, un second élément (28) de retenue de verrouillage venant s'appliquer contre le support, espacé axialement du premier élément de retenue de verrouillage et présentant une ouverture horizontale pour supporter et verrouiller la broche électrique dans une position horizontale après rotation de celle-ci jusqu'à la position de l'ouverture horizontale, et un disjoncteur (42), (43) raccordé à la broche électrique pour distribuer le courant électrique dans l'installation de commutation.

2. Installation de commutation telle que revendiquée dans la revendication 1, caractérisée en ce que le disjoncteur est un disjoncteur de type amovible comportant des doigts élastiques (40) pour établir et couper le contact électrique avec la broche électrique (12).

FIG. I

FIG. 2

FIG. 3

FIG. 4

FIG. 5

FIG. 6